# EUROPEAN PATENT SPECIFICATION

(11) **EP 1 158 861 B1**
(45) Date of publication and mention of the grant of the patent: **21.05.2003**
(21) Application number: 00919199.0
(22) Date of filing: 07.03.2000
(51) Int. Cl.: A23C 9/13, A23L 1/24

(54) **FOOD PRODUCT AND A METHOD OF PRODUCING THE SAME**
LEBENSMITTELPRODUKT UND VERFAHREN ZU DESSEN HERSTELLUNG
PRODUIT ALIMENTAIRE ET SON PROCEDE DE FABRICATION

(30) Priority: 18.03.1999 SE 9900979
(43) Date of publication of application: 05.12.2001
(73) Proprietor: Fermigel AB, 276 60 Skillinge (SE)
(72) Inventor: LINDSTAM, Christer, S-272 31 Simrishamn (SE)
(74) Representative: Karlsson, Leif
(86) International application number: SE0000443
(87) International publication number: WO00054600

(56) References cited:
- EP-A1- 0 049 927
- EP-A2- 0 187 575
- GB-A- 1 527 526

## Description

The invention relates to heat-stable acid liquid or gelled food product having a low fat content. The invention also refers to a method of producing such a food product.

The sedentary life of today has almost completely changed the demands made on foodstuff. Even though we presently have a lesser need of a energy rich food too much fat is still consumed. The attentive consumer nowadays demands foodstuff with low calorie value but wishes on the same time that it shall be as appetizing as traditional food.

It is nowadays customary to use products having a low fat content. However, when pH is decreased in a liquid or gelled food product having a low fat content, it is required that the proteins are stabilized in such a way that they do not separate into dry solids and whey. This is especially important when the product after such a heat treatment is intended to be heat treated again.

EP-A2-0187575 discloses a fermented milk product containing less than 7 weight % of fat and comprising 2.0 weight % of starch, 0.34 weight % of stabilizers (carrageenan and gums), 0.1 weight % of saccharose and from 2.5 to 3 weight % of protein.

EP-A1-0049927 discloses a process for producing a heat-stable dressing comprising adding the ingredients after milk fermentation, homogenization and pasteurization.

Normally, these products are thickened/stabilized with for example gelatin or additional protein. Alternatively, the dry matter content of the product can be increased, which is sufficient provided that the product shall not be heated, since such products are easily hydrolyzed at low pH-values and increased temperatures.

For example, an acidified food product with a fat content of 34 % can be heat treated without a separation being obtained. However, an acidified food product with a fat content of only 17 % will separate when heat treated because of the low fat content.

When serving a kebab or a pizza a sauce is often served; which is made from a fermented milk product. In this connection the sauce is spread over the hot dish, which results in that the milk proteins of the product coagulate and whey is separated. Thus, the sauce which the consumer also "eats with his eyes" does not look very appetizing. Furthermore, the dish becomes soggy and smeary in its consistency.

The process usually used in a dairy for the production of a fermented products initially consists of mixing in a tank the raw materials, which comprises protein, carbohydrate, and fat, and then a stabilizer is optionally added. The mixture is then treated continuously by pumping it to a pasteurizer, in which it is preheated to a homogenization temperature, homogenized, pasteurized, and chilled to a fermentation temperature. The purpose of the homogenization, which is an integral part of the pasteurization step, is to counteract the separation of whey in the product and that it becomes grainy.

The mixture is filled into a second tank and is inoculated with a culture of living microorganisms. The fermentation is then allowed to take place either in this tank or in a container, after being filled into the same.

When the fermentation takes place in the tank, the product obtained is afterwards pumped and filled into containers. The fermenting microorganisms in product obtained can also be killed by heating, and the containers subsequently being filled either directly by means of hot-filling or after decreasing the temperature.

All liquid or gelled products within the dairy industry are generally produced in this way. However, if not properly handled there is a risk that the final product will be a not so smooth product which has a stale and grainy profile without its desired characteristics..

The object of the invention is to achieve a heat-stable acid liquid or gelled food product having a low fat content whereby the above-mentioned problems are eliminated, all necessary ingredients except the culture for the fermentation being added before the heating- homogenization-pasteurization step.

This is achieved by the method of claim 1, the use of claim 10 and the food product of claim 19.

By stabilizing an acidified food product with low fat content according to the invention the high fat content is compensated for, which means that the product can be cooked and thus also be used in hot cooking. Likewise, a fermented milk product in form of a sauce, which is stabilized according to the invention, becomes insensitive to the heat transferred from the dish to the sauce.

In order to obtain a heat-stable sour liquid or gelled food product having a low fat content, which comprises protein, carbohydrate, and fat, a polysaccharide or a polysaccharide containing material is mixed in a water solution having a protein content of at least 2.0 weight%, a low molecular weight carbohydrate content of at least 0.1 weight% and a fat content of at least 0.1 weight% of the final product. The mixture is then by means of a fat adjusted to a fat content which is less than 25.5 weight%, the polysaccharide representing at least 0.5 weight% of the final product, and the pH is lowered to a value of less than pH 5.0.

Of course, instead of mixing the stabilizer in the form of polysaccharide with a milk component the stabilizer can first be mixed in water and then for example a milk powder can be added. In order to avoid problems of lump formation the polysaccharide can likewise be mixed with a portion of the fat before it is mixed with the water solution.

Thus, the stabilizer is added to a liquid medium, for example milk or cream. If only solid components and water are used the order of mixing is not of any significance. Optional spices and other flavoring agents can be added to the product after the fermentation procedure.

In this connection heat-stable means that the inventive food product can be heated to the boiling point without separation and that it can be used on a dish to be gratinated in an oven at about 250 °C without its stability being lost by impaired consistency due to reduced homogeneity or viscosity.

Furthermore, a low molecular weight carbohydrate means carbohydrates which mainly are mono- and/or disaccharides having a small amount of saccharide monomers of up to six monomers. Preferably, different types of milk are used.

In order to obtain a heat-stable product the stabilizers, which according to the invention are added to a food product having a low fat content, which is intended for a low pH and comprises protein, carbohydrate, and fat, must be able to swell upon contact with water as well as bind proteins so that they do not precipitate when the product is heated.

The polysaccharide comprises 1.6 weight% of the product when the fat content is 17 weight%.

Suitable stabilizers are polysaccharides which for example are starch, pectin, xanthan gum, guar gum (guar flour), fruit seed flour, agar, carrageenan, and carboxymethylcellulose in combination or separately. Preferably, the stabilizing polysaccharide is starch (e.g. corn starch), most preferably a mixture of starch and guar. The most preferred polysaccharide stabilizer is composed of 1.5 weight% starch and 0.1 weight% guar gum.

Animal fat in the inventive food product can completely or partly be replaced by vegetable fat. Likewise, the water-soluble protein portion from milk can completely or partly be replaced by for example vegetable proteins.

The costs for the stabilization is considerably lower than the fat content compensated for (e.g. the difference between 34 and 17 % fat), which for the consumer results in a cheaper and "slimmer" product.

In order to achieve a higher viscosity in for example a heat-stable garlic dressing (cooking yogurt) the dry matter content of the product can be increased by adding an oligosaccharide, i.e. maltodextrin.

In the method according to the invention all the essential ingredients are added before the general pasteurization with homogenization and subsequent fermentation within the dairy industry. This also applies for the same product with a long shelf life. The only exception is when the product needs extra flavoring, which takes place after the fermentation.

Thus, in the inventive method the raw materials are first mixed and then continuously heated to the homogenization temperature, homogenized, pasteurized at 90-95 °C for 2-5 min, the temperature then being brought to the fermentation temperature. The pasteurization is primarily intended to provide adequate conditions for the fermenting microorganisms.

The mixture is inoculated with the suitable microorganism or microorganisms, and the pH is lowered to a pH below 5. This can take place either in a tank or in a packed container.

When the product is fermented and/or its pH is lowered in a tank, other ingredients may be added before a second pasteurization (80 °C for 30 s), the product then being packed aseptically with all its ingredients in an acid environment.

In process lines for the production of fermented products there is almost always a homogenizer which can work at a pressure up to 220-250 bar. However, this is not necessary in order to achieve a satisfactory result when producing a heat-stable product according to the invention. When a homogenization is necessary, it can be performed at a pressure which is less than 200 bar and even at such a low pressure as 10-20 bar. The homogenization is preferably performed before the lowering of pH.

Starch and guar are mixed in a cream having a fat content of 17 %. The mixture is homogenized, pasteurized and then fermented. However, if a long shelf life is required second pasteurization is necessary. Another homogenization step is not necessary.

The adjusted mixture can than be processed according to usual methods and chilled to a temperature which is suitable for fermentation.

The lowering of the pH is achieved by processing the mixture as when producing products which are intended to be fermented, and the temperature of the mixture is set at a suitable temperature for living microorganisms, living microorganisms then being added and fermentation being performed at said temperature. The purpose of the inoculated microorganisms is that they shall dominate the final product. Preferably, the living microorganisms are those bacteria which usually are used within the food industry for the fermentation of food.

Examples of useful microorganisms in the inventive method are mesophilic and thermophilic microorganisms such as *Streptococcus lactis, S. cremoris, S. diacetilactis, S. thermophilus, S. reuteri, S. plantarum, Leuconostoc citrovorum, Lactobacillus bulgaris, L. casei, L. acodophilus, L. brevis, Bifidobacterium,* and *Saccharomyces kefir.* These organisms can be used alone or in combinations, for example *Saccharomyces kefir* together with *Lactobacillus brevis.* Other examples are *Streptococcus lactis* or *S. cremoris* in combination with *Leuconostoc* *citrovorum* and *S. diacetilactis* as well as *Lactobacillus bulgaris* and *Streptococcus thermophilus.*

The lowering of pH can also be achieved by adding an acid to the mixture. Preferably, the acid is citric acid or lactic acid.

Preferably, the inoculated mixture is gelled in its container with the inventive stabilizer. In this case it is preferred that the stabilizer is starch only or a mixture of starch with guar gum.

In this connection a gelled product means a fermented or acidified product. If the gel of such an already gelled product is broken it will become more or less liquid. Thus, a product will ultimately obtain liquid properties if it is fermented (acidified) in a tank and later pumped to a container for distribution.

It is also possible to produce a product which is liquid in its container. In this case the fermentation is performed in a tank and the contents are pumped into a container.

Then the product is chilled. A product that also can comprise a living bacterial culture can also be distributed chilled.

A fermented product according to the invention can without being separated be heated again in order to kill the bacterial culture, preferably by heating the product, i.e. by pasteurizing at 80 °C for 30 s without the stability being lost. This results in that the product can be filled into a container and obtain a prolonged durability.

In order to obtain a sufficient shelf life at room temperature the product is subjected to a continuous heating at 80 °C for 30 s, the product then being packed aseptically. This means that the product must not be reinfected after the pasteurization or during the packaging. The heat treatment used is only sufficient to kill microorganisms yeast and fungi, which are able to live in an acid environment.

A product fermented according to the invention in a sealed container can after the fermentation be placed in a room at high temperature conditions in order to kill yeast and fungi, a prolonged stability of the product being obtained.

A product fermented according to the invention in a tank can also be hot filled into a container, the container then being sealed and cooled to ambient temperature or below. A product processed in this way will not be reinfected and will have an extended shelf life at room temperature.

The product according to the invention is not intended to be sterilized and thus not to be packed as a non-perishable article.

A great advantage of the product according to the present invention is that it can be handled and processed by using available equipment both during the processing itself and in connection with packaging and distribution.

It is representative of the invention that the product has a fat content which is less than 25.5 weight% and that it can be heated to the boiling point several times without any separation of water and protein. The product is also excellent for use in a gratinated dish.

The stabilized product can be used as it is or for making traditional sauces, however, with a low fat content, such as hollandaise sauce, béarnaise sauce, etc., in which it is required to lower the pH with for example wine-vine-gar or lemon juice. By the product being stabilized according to the invention it is also able to stand a low pH, pH 4.5 or less, when heated.

However, another important aspect is that additional protein, for example an egg, can be added to the product by the consumer in order to obtain a more viscous consistency and stable cooking properties when heat treated.

Thus, further protein can be added to the inventive food product on at least two occasions without the separation of proteins during heat treatment of the product. Firstly, after the fermentation, the microorganisms in the product subsequently being killed and the product being packed. Secondly, by the consumer - either to a gelled or to a liquid food product - for the cooking of for example a high-protein sauce.

### EXAMPLES

The invention will now be further described and illustrated by reference to the following examples. It should be noted, however, that these examples should notbe construed as limiting the invention in any way.

The examples are based on a heat stable crème fraiche having a fat content of 17 %.

The following ingredients are mixed in a tank at a temperature of less than 20 °C in order to obtain a stabilized mixture.

| | |
|---|---|
| Skim milk | 559 kg |
| Cream (40 %) | 425 kg |
| Fermigel* | 16 kg |

| | |
|---|---|
| *Trade name for starch only or in combination with e.g. guar gum. | |

The fat in the form of cream can completely or partly be replaced by vegetable oils or vegetable fat. Likewise, the milk protein can completely or partly be replaced by vegetable protein.

The mixing is continued until all ingredients are homogeneously distributed. The stabilized mixture has slightly higher viscosity than milk of 3 % fat or coffee cream of 12 % fat.

### Example 1. Production of a heat-stable sour liquid food product having a low fat content.

The stabilized mixture is continuously homogenized and pasteurized by means of heating to a temperature of 90-95 °C at a holding time of 3-5 min. Then the pasteurized mixture is chilled to the fermentation temperature of the lactic acid bacteria used and transferred to a fermentation tank.

The contents of the tank is inoculated with a culture of lactic acid bacteria in a customary way and fermentation is allowed to proceed until a pH below 5 is obtained. Flavoring agents may then be optionally added.

The fermented product is packed into containers. The product is chilled to a temperature of less than 10 °C either on its way to the packaging machine or.in the containers, which are placed in a refrigerating chamber.

### Example 2. Production of a heat-stable sour gelled food product having a low fat content.

The stabilized mixture is continuously homogenized, pasteurized, chilled, and inoculated with lactic acid bacteria as in Example 1.

The inoculated mixture is pumped to a packaging machine and filled into containers. The containers are placed in a tempered room at a temperature of the lactic acid bacteria used and fermentation is allowed to proceed until a pH below 5 is obtained. The containers are then chilled to a temperature of less than 10 °C in a refrigerating chamber.

These two types of final products in the containers intended for consumers, which are obtained in Example 1 and 2, i.e. either liquid or gelled products, respectively, contain not only 17 % fat but also living microorganisms. The products are boiling-resistant and can be flavored by the consumers with different species, acids, broths, and oils. It is also possible for the consumer to add an egg yolk when preparing for example a mayonnaise as well as a Béarnaise sauce or a Hollandaise sauce. These sauces can also be poured over a dish of meat or fish and gratinated in an oven. These two types of final products of low fat content - which can be boiled - can of course also be used as traditional products without heat resistant properties i.e. for the preparation of sauces and dressings, which are not intended to be heat treated.

### Example 3. Production of a heat-stable sour liquid food product having a low fat content and a long shelf life.

The stabilized mixture is continuously homogenized, pasteurized, chilled, inoculated with lactic acid bacteria and fermented as in Example 1. At this stage additional protein can be added to the fermented mixture. Furthermore, flavoring agents may also be added.

The fermenting microorganisms in the fermented mixture are then killed by means of a continuous pasteurization, the mixture being heat treated at about 80 °C for about 30 s. The final product is continuously chilled to 35-40 °C and then hotfilled under aseptic conditions in sterile containers which after filling are sealed in such a way that while stored before being consumed the product is not reinfected by harmful micro-organisms.

In this way the final product obtains a prolonged shelf life of several months at room temperature by the product being subjected to a heat treatment in order to completely kill or inactivate microorganisms present in the foodstuff.

Also this product in the form of a heat-stable sour liquid food product of 17 % fat can be repeatedly heat treated by the consumer and used for the preparation of different sauces.

## Claims

1. Method of producing a heat-stable acid liquid or gelled food product having a low fat content, which comprises protein, carbohydrate and fat, **characterized in that**
a polysaccharide is mixed in a water solution having a protein content of at least 2.0 weight%, a low molecular weight carbohydrate content of at least 0.1 weight%, and a fat content of at least 0.1 weight% of the final product; the mixture by using a fat is adjusted to a fat content of less than 25.5 weight%, the polysaccharide comprising at least 0.5 weight% of the final product;
the mixture is subjected to pasteurization with homogenization;
the mixture is chilled to a temperature which is suitable fermentation;
the mixture is inoculated with living microorganisms and fermentation is performed at said temperature to a pH below 5.0; and
the mixture is aseptically filled into sterile containers.

2. Method as in claim 1, **characterized in that** the pasteurization with homogenization are procedures generally used for the processing of fermented dairy products.

3. Method as in claim 1 or 2, **characterized in that** the polysaccharide is mixed with a portion of the fat before it is mixed with the water solution.

4. Method as in any of claims 1-3, **characterized in that** the homogenization of the mixture is performed at a pressure of less than 250 bar.

5. Method as in any of claims 1-4, **characterized in that** the fermentation of the mixture is performed in the containers, a gelled food product being obtained in the same.

6. Method as in any of claims 1-4, **characterized in that** the fermentation of the mixture is performed before it is filled into the containers, a liquid food product being obtained in the same.

7. Method as in any of claims 1-6, **characterized in that** the microorganisms are bacteria.

8. Method as in claim 6, **characterized in that** after the fermentation the microorganisms in the product are killed by means of heating the product before it is filled into the containers.

9. Method as in any of claims 1-8, **characterized in that** additional protein is added to the food product obtained in the containers.

10. Use of a composition for the manufacturing of a heat-stable acid liquid or gelled low fat food product having a pH below 5 by means of the method of any of claims 1 to 9, said composition containing less than 25.5 weight% fat and comprising at least 2.0 weight% protein, at least 0.1 weight% low molecular weight carbohydrate and at least 0.1 weight% polysaccharide of the final product.

11. Use as in claim 10, **characterized in that** the polysaccharide is starch, pectin, xanthan, guar gum, agar, carrageenan, carboxymethylcellulose or mixtures thereof.

12. Use as in claim 10 or 11, **characterized in that** the polysaccharide comprises between 0.1 and 5 weight% of the final product.

13. Use as in claim 12, **characterized in that** when the fat content is 17 weight% the polysaccharide is 1.6 weight% of the final product.

14. Use as in claim 13, **characterized in that** polysaccharide is composed of 1.5 weight% starch and 0.1 weight% guar gum.

15. Use as in any of claims 10-14, **characterized in that** the fat is completely or partly of animal origin.

16. Use as in any of claims 10-14, **characterized in that** the fat is completely or partly of vegetable origin.

17. Use as in any of claims 10-14, **characterized in that** the protein is completely or partly of animal origin.

18. Use as in any of claims 10-14, **characterized in that** the protein is completely or partly of vegetable origin.

19. Heat-stable acid liquid or gelled food product having a low fat content, **characterized in that** the product contains 17 weight% fat and comprises at least 2.0 weight% protein, at least 0.1 weight% low molecular weight carbohydrate and 1.6 weight% polysaccharide as a stabilizer, and fermenting microorganisms, the product having a pH which is lower than pH 5.0.

20. Food product as in claim 19, **characterized in that** the polysaccharide is starch, pectin, xanthan, guar gum, agar, carrageenan, carboxymethylcellulose or mixtures thereof.

21. Food product as in claim 20, **characterized in that** polysaccharide is composed of 1.5 weight% starch and 0.1 weight% guar gum.

22. Food product as in any of claims 19-21, **characterized in that** the fermenting microorganisms are killed.

## Patentansprüche

1. Verfahren zur Herstellung eines wärmestabilen, sauren, flüssigen oder gelierten Lebensmittelprodukts mit einem niedrigen Fettanteil, welches Protein, Kohlehydrat und Fett enthält, **dadurch gekennzeichnet, daß** ein Polysaccharid in eine Wasserlösung gemischt wird mit einem Proteinanteil von wenigstens 2 Gew.%, einem Anteil an Kohlehydrat mit einem niedrigen Molekulargewicht von wenigstens 0,1 Gew.% und einem Fettanteil von wenigstens 0,1 Gew.% des Endprodukts;
das Gemisch unter Verwendung eines Fetts auf einen Fettanteil von wenigstens 25,5 Gew.% eingestellt wird, wobei das Polysaccharid wenigstens 0,5 Gew.% des Endprodukts besitzt;
das Gemisch einer Pasteurisierung mit einer Homogenisierung unterworfen wird;
das Gemisch auf eine Temperatur, die für eine Fermentierung geeignet ist, schnell abgekühlt wird;
das Gemisch mit lebenden Mikroorganismen geimpft wird und eine Fermentierung bei der Temperatur auf einen pH-Wert unterhalb von 5,0 durchgeführt wird; und
das Gemisch aseptisch in sterile Behälter gefüllt wird.

2. verfahren nach Anspruch 1, **dadurch gekennzeichnet, daß** die Pasteurisierung mit der Homogenisierung Vorgänge sind, die allgemein für die Verarbeitung von fermentierten Molkereiprodukten verwendet werden.

3. Verfahren wie in Anspruch 1 oder 2, **dadurch gekennzeichnet, daß** das Polysaccharid mit einem Teil des Fetts gemischt wird, bevor es mit der Wasserlösung gemischt wird.

4. Verfahren wie in einem der Ansprüche 1 bis 3, **dadurch gekennzeichnet, daß** die Homogenisierung des Gemischs bei einem Druck von weniger als 250 bar ausgeführt wird.

5. Verfahren wie in einem der Ansprüche 1 bis 4, **dadurch gekennzeichnet, daß** die Fermentierung des Gemischs in den Behältern durchgeführt wird, wobei ein geliertes Lebensmittelprodukt in demselben erhalten wird.

6. Verfahren wie in einem der Ansprüche 1 bis 4, **dadurch gekennzeichnet, daß** die Fermentierung des Gemischs durchgeführt wird, bevor es in die Behälter gefüllt wird, wobei ein flüssiges Lebensmittelprodukt in demselben erhalten wird.

7. Verfahren wie in einem der Ansprüche 1 bis 6, **dadurch gekennzeichnet, daß** die Mikroorganismen Bakterien sind.

8. Verfahren wie in Anspruch 6, **dadurch gekennzeichnet, daß** die Mikroorganismen in den Produkten nach der Fermentierung durch Erwärmung des Produkts getötet werden, bevor es in die Behälter eingefüllt wird.

9. Verfahren wie in einem der Ansprüche 1 bis 8, **dadurch gekennzeichnet, daß** zusätzliches Protein dem erhaltenen Lebensmittelprodukt in den Behältern zugegeben wird.

10. Verwendung einer Zusammensetzung für die Herstellung eines wärmestabilen, sauren, flüssigen oder gelierten Lebensmittelprodukts mit einem niedrigen Fettanteil und einem pH-Wert unterhalb von 5 mittels des Verfahrens von einem der Ansprüche 1 bis 9, wobei die Zusammensetzung weniger als 25,5 Gew.% Fett enthält und wenigstens 2,0 Gew.% Protein, wenigstens 0,1 Gew.% eines Kohlenhydrats mit einem niedrigen Molekulargewicht und wenigstens 0,1 Gew.% Polysaccharid des Endprodukts enthält.

11. Verwendung wie in Anspruch 10, **dadurch gekennzeichnet, daß** das Polysaccharid Stärke, Karrageenschleim, Karboxymethylzellulose oder Gemische davon ist.

12. Verwendung wie in Anspruch 10 oder 11, **dadurch gekennzeichnet, daß** das Polysaccharid zwischen 0,1 und 5 Gew.% des Endprodukts enthält.

13. Verwendung wie in Anspruch 12, **dadurch gekennzeichnet, daß** wenn der Fettanteil 17 Gew.% ist, das Polysaccharid 1,6 Gew.% des Endprodukts ausmacht.

14. Verwendung wie in Anspruch 13, **dadurch gekennzeichnet, daß** das Polysaccharid aus 1,5 Gew.% Stärke und 0,1 Gew.% Guargummi besteht.

15. Verwendung wie in einem der Ansprüche 10 bis 14, **dadurch gekennzeichnet, daß** das Fett vollständig oder teilweise tierischen Ursprungs ist.

16. Verwendung wie in einem der Ansprüche 10 bis 14, **dadurch gekennzeichnet, daß** das Fett vollständig oder teilweise pflanzlichen Ursprungs ist.

17. Verwendung wie in einem der Ansprüche 10 bis 14, **dadurch gekennzeichnet, daß** das Protein vollständig oder teilweise tierischen Ursprungs ist.

18. Verwendung wie in einem der Ansprüche 10 bis 14, **dadurch gekennzeichnet, daß** das Protein vollständig oder teilweise pflanzlichen Ursprungs ist.

19. Wärmestabiles, saures, flüssiges oder geliertes Lebensmittelprodukt mit einem niedrigen Fettanteil, **dadurch gekennzeichnet, daß** das Produkt 17 Gew.% Fett enthält und wenigstens 2 Gew.% Protein, wenigstens 0,1 Gew.% Kohlenhydrat mit einem niedrigen Molekulargewicht und 1,6 Gew.% Polysaccharid als ein Stabilisierungsmittel und fermentierende Mikroorganismen enthält, wobei das Produkt einen pH-Wert hat, der niedriger als 5,0 liegt.

20. Lebensmittelprodukt wie in Anspruch 19, **dadurch gekennzeichnet, daß** das Polysaccharid Stärke, Pektin, Xanthan, Guargummi, Agar, Karrageen, Karboxymethylzellulose oder Gemische davon ist.

21. Lebensmittelprodukt wie in Anspruch 20, **dadurch gekennzeichnet, daß** das Polysaccharid aus 1,5 Gew.% Stärke und 0,1 Gew.% Guargummi besteht.

22. Lebensmittelprodukt wie in einem der Ansprüche 19 bis 21, **dadurch gekennzeichnet, daß** die fermentierenden Mikroorganismen getötet sind.

## Revendications

1. Procédé de fabrication d'un produit alimentaire liquide ou gélifié, acide et thermostable ayant une faible teneur en matière grasse, qui comprend des protéines, des glucides et des lipides, **caractérisé en ce que**
un polysaccharide est mélangé dans une solution aqueuse ayant une teneur en protéines d'au moins 2,0 % en poids, une teneur en glucides de faible masse moléculaire d'au moins 0,1 % en poids, et une teneur en matière grasse d'au moins 0,1 % en poids du produit final ;
En utilisant une matière grasse, le mélange est ajusté à une teneur en matières grasses inférieure à 25,5 % en poids, le polysaccharide comprenant au moins 0,5 % en poids du produit final ;
le mélange est soumis à une pasteurisation avec homogénéisation ;
le mélange est refroidi jusqu'à une température qui est adaptée pour la fermentation ;
des microorganismes vivants sont inoculés dans le mélange et la fermentation est effectuée à ladite température à un pH inférieur à 5,0 ; et
le mélange est versé sous asepsie dans des récipients stériles.

2. Procédé selon la revendication 1, **caractérisé en ce que** la pasteurisation avec homogénéisation sont des procédures généralement utilisées pour le traitement de produits laitiers fermentés.

3. Procédé selon la revendication 1 ou 2, **caractérisé en ce que** le polysaccharide est mélangé avec une partie de la matière grasse avant d'être mélangé avec la solution aqueuse.

4. Procédé selon l'une quelconque des revendications 1 à 3, **caractérisé en ce que** l'homogénéisation du mélange est effectuée à une pression inférieure à 250 bars.

5. Procédé selon l'une quelconque des revendications 1 à 4, **caractérisé en ce que** la fermentation du mélange est effectuée dans les récipients, un produit alimentaire gélifié étant obtenu dans ceux-ci.

6. Procédé selon l'une quelconque des revendications 1 à 4, **caractérisé en ce que** la fermentation du mélange est effectuée avant qu'il ne soit versé dans les récipients, un produit alimentaire liquide étant obtenu dans ceux-ci.

7. Procédé selon l'une quelconque des revendications 1 à 6, **caractérisé en ce que** les microorganismes sont des bactéries.

8. Procédé selon la revendication 6, **caractérisé en ce que**, après la fermentation, les microorganismes contenus dans le produit sont détruits par le chauffage du produit avant qu'il ne soit versé dans les récipients.

9. Procédé selon l'une quelconque des revendications 1 à 8, **caractérisé en ce que** des protéines supplémentaires sont ajoutées au produit alimentaire obtenu dans les récipients.

10. Utilisation d'une composition pour la fabrication d'un produit alimentaire à faible teneur en matière grasse, liquide ou gélifié, acide et thermostable, ayant un pH inférieur à 5, au moyen du procédé selon l'une quelconque des revendications 1 à 9, ladite composition contenant moins de 25,5 % en poids de matière grasse et comprenant au moins 2,0 % en poids de protéines, au moins 0,1 % en poids de glucides de faible masse moléculaire et au moins 0,1 % en poids de polysaccharide du produit final.

11. Utilisation selon la revendication 10, **caractérisée en ce que** le polysaccharide est l'amidon, la pectine, le xanthane, la gomme de guar, l'agar, les carraghénanes, la carboxyméthylcellulose ou des mélanges de ceux-ci.

12. Utilisation selon la revendication 10 ou 11, **caractérisée en ce que** le polysaccharide comprend entre 0,1 et 5 % en poids du produit final.

13. Utilisation selon la revendication 12, **caractérisée en ce que**, lorsque la teneur en matière grasse est de 17 % en poids, le polysaccharide représente 1,6 % en poids du produit final.

14. Utilisation selon la revendication 13, **caractérisée en ce que** le polysaccharide se compose de 1,5 % en poids d'amidon et de 0,1 % en poids de gomme de guar.

15. Utilisation selon l'une quelconque des revendications 10 à 14, **caractérisée en ce que** la matière grasse est complètement ou partiellement d'origine animale.

16. Utilisation selon l'une quelconque des revendications 10 à 14, **caractérisée en ce que** la matière grasse est complètement ou partiellement d'origine végétale.

17. Utilisation selon l'une quelconque des revendications 10 à 14, **caractérisée en ce que** les protéines sont complètement ou partiellement d'origine animale.

18. Utilisation selon l'une quelconque des revendications 10 à 14, **caractérisée en ce que** les protéines sont complètement ou partiellement d'origine végétale.

19. Produit alimentaire liquide ou gélifié, acide et thermostable ayant une faible teneur en matière grasse, **caractérisé en ce que** le produit contient 17 % en poids de matière grasse et comprend au moins 2,0 % en poids de protéines, au moins 0,1 % en poids de glucides de faible masse moléculaire et 1,6 % en poids de polysaccharide en tant que stabilisant, et des microorganismes de fermentation, le produit ayant un pH qui est inférieur à pH 5,0.

20. Produit alimentaire selon la revendication 19, **caractérisé en ce que** le polysaccharide est l'amidon, la pectine, le xanthane, la gomme de guar, l'agar, les carraghénanes, la carboxyméthylcellulose ou des mélanges de ceux-ci.

21. Produit alimentaire selon la revendication 20, **caractérisé en ce que** le polysaccharide se compose de 1,5 % en poids d'amidon et de 0,1 % en poids de gomme de guar.

22. Produit alimentaire selon l'une quelconque des revendications 19 à 21, **caractérisé en ce que** les microorganismes de fermentation sont détruits.
